# EUROPÄISCHE PATENTSCHRIFT

(11) **EP 1 123 787 B1**
(45) Veröffentlichungstag und Bekanntmachung des Hinweises auf die Patenterteilung: **06.07.2005**
(21) Anmeldenummer: 01100483.5
(22) Anmeldetag: 09.01.2001
(51) Int. Cl.: B27K 3/36

(54) **Verfahren zum Schutz von Holzpaletten gegen Pilzbefall**
Process for the protection of wooden pallets from fungal attack
Procédé pour la protection de palettes en bois contre les attaques fongiques

(30) Priorität: 25.01.2000 DE 10003170
(43) Veröffentlichungstag der Anmeldung: 16.08.2001
(73) Patentinhaber: Nutrinova Nutrition Specialties & Food Ingredients GmbH, 65929 Frankfurt am Main (DE)
(72) Erfinder: Wetzel, Ariane, 65926 Frankfurt am Main (DE)
(74) Vertreter: Schweitzer, Klaus, Dr.

(56) Entgegenhaltungen:
- WO-A-96/11572
- DE-A- 19 703 552
- DE-U- 29 701 633
- US-A- 4 585 795
- DATABASE WPI Section Ch, Week 199907 Derwent Publications Ltd., London, GB; Class A60, AN 1999-076371 XP002166492 & JP 10 316511 A (HOKKO CHEM IND CO LTD), 2. Dezember 1998 (1998-12-02)
- PATENT ABSTRACTS OF JAPAN vol. 1998, no. 08, 30. Juni 1998 (1998-06-30) & JP 10 067607 A (TAKEDA CHEM IND LTD), 10. März 1998 (1998-03-10)

## Beschreibung

Die Erfindung betrifft ein Verfahren zum Schutz von Holzpaletten gegen Pilzbefall.

Holz ist in feuchter Umgebung schimmel- und pilzanfällig. Eine ganze Reihe von Pilzen ist in der Lage, im Holz Schäden zu verursachen. Dazu gehören verschiedene holzverfärbende Pilze, die relativ schnell auf frischen und der Witterung ausgesetzten Holzflächen wachsen können. Die Verfärbungen, die z. B. von Aureobasidium pullulans verursacht werden können, sind bei nicht behandeltem Holz häufig. Sie sind unter der Bezeichnung "Bläue" bekannt. Das Wachsen von solchen Pilzen kann nicht nur zur Beeinträchtigung des Aussehens von Holz bzw. daraus hergestellter Gegenstände führen, es besteht darüber hinaus auch das Risiko, dass Pilze vom Holz auf andere Gegenstände oder Produkte übergehen und dass sogar Dauerformen der Schimmelpilze in die Umgebungsluft abgegeben werden. Das Einatmen solcher Pilze kann bei sensibilisierten Personen beispielsweise zu Asthmaanfällen führen.

Zum Schutz von Holz und Holzgegenständen gegen Pilzbefall sind eine Reihe von Stoffen und Behandlungsverfahren vorgeschlagen worden.

Z. B. lässt sich Holz dadurch schützen, dass man es auf einen niedrigen H₂O-Gehalt trocknet. Das Wachsen von Pilzen ist an das Vorhandensein von Wasser gebunden, in der Regel an Wassergehalte oberhalb von 20 %. Wird das getrocknete Holz der Witterung ausgesetzt, wird bei höherer Luftfeuchtigkeit die Wirkung einer Trocknung aber bald wieder aufgehoben.

Auch Anstriche, Lacke und ähnliche Überzüge verhindern, dass Pilze die Oberfläche des Holzes besiedeln oder in das Holz eindringen können. Diese Verfahren sind in der Praxis bewährt, sie sind aber zum Teil arbeits- oder kostenaufwendig oder nur so lange wirksam, wie Holz oder Holzgegenständen nicht in feuchte Umgebung gelangen oder die Anstriche oder Beschichtungen nicht beschädigt werden. Beim Transport und anderer mechanischer Beanspruchung ist das aber leicht möglich, so dass die Schutzwirkung wenigstens teilweise verloren geht.

Außerdem ist eine ganze Reihe von Stoffen mit fungizider Wirkung bekannt, die in der Praxis als Holzschutzmittel eingesetzt werden. Beispielsweise Teeröle, zinnorganische Verbindungen, verschiedene chlorierte aromatische und aliphatische Verbindungen und andere mehr, die allein oder in Kombination verwendet werden können. Viele dieser Stoffe zeichnen sich durch eine ausgeprägte Wirkung gegen Pilze aus. Ihre Anwendung ist in der Regel einfach. Das Holz lässt sich in vielen Fällen durch eine Imprägnierung nachhaltig vor Pilzbefall schützen. Nachteil dieser Stoffe ist aber, dass sie sich auch durch eine mehr oder weniger ausgeprägte Toxizität auszeichnen, die ihren Einsatz in empfindlichen Bereichen problematisch machen kann. Das gilt insbesondere für die Verwendung im Umfeld der Produktion von Lebensmitteln, wenn der Übergang auch nur von Spuren auf Lebensmittel oder Lebensmittelverpackungen nicht mit Sicherheit ausgeschlossen werden kann. Insbesondere bei geruchsintensiven Holzschutzmitteln wie den Holzteerölen besteht außerdem das Risiko, dass schon Spuren auf Lebensmittel bereits geruchliche Beeinträchtigungen verursachen. In der Praxis wird trotzdem immer wieder festgestellt, dass insbesondere Holzpaletten, auf denen Rohstoffe transportiert und angeliefert werden, während des Transports und der Lagerung von holzzersetzenden Pilzen befallen werden, die mit den Paletten in Lager- und Produktionsräume eingeschleppt werden können und sich damit zu einem hygienischen Problem entwickeln können.

Einige Konservierungsstoffe, die zur Haltbarmachung von verschiedenen Lebensmitteln eingesetzt werden, wurden bereits auf ihre Anwendbarkeit zur Konservierung von Holz geprüft, insbesondere in Form von Derivaten, die als solche nicht zur Lebensmittelkonservierung verwendet werden. Das wasserunlösliche Zinksalz der Sorbinsäure wurde beispielsweise als wirkungslos (Holzforschung 17, 97 (1963)) beschrieben. Untersuchungen zum Einsatz des kommerziell nicht erhältlichen Natriumsorbats an Bambus, der dem bei uns üblicherweise verwendeten Nadelholz auf Grund seiner festeren Struktur nicht völlig vergleichbar ist und der deshalb eher besser von Pilzbefall zu schützen sein sollte, ergaben zudem in der Regel bereits nach wenigen Tagen Befall mit Pilzen und schlechtere Resultate als die alternativ geprüfte Dehydracetsäure. Lediglich bei dem praxisunüblichen pH-Wert 3,0 war Natriumsorbat in diesen Untersuchungen (Hakko Kogaku Zasshi 37, 19 (1959)) wirksam.

Die WO 96/11572 beschreibt eine antimikrobiell wirksame Zusammensetzung, welche Carbonsäuren mit bis zu 10 C-Atomen bzw. Salze von diesen, sowie C₃-C₁₀-Diole enthält. Gemäß WO 96/11572 sind diese Zusammensetzungen geeignet zum Reinigen, Desinfizieren, zur Oberflächenbehandlung, Imprägnierung und zur antimikrobiellen Behandlung.

In der Praxis werden Lebensmittelkonservierungsstoffe und ihre Derivate nicht als Holzschutzmittel verwendet, da sie bisher als unzureichend wirksam angesehen wurden. Im Gegensatz zu den in der Technik verwendeten Holzschutzmitteln sind die in der Lebensmittelverarbeitung eingesetzten Konservierungsstoffe aber gesundheitlich unbedenklich, so dass der Übergang von Spuren auf Lebensmittelverpackungen eher als bei technischen Holzschutzmitteln tolerierbar wäre. Außerdem sind sie geruchsneutral, so dass von ihnen keine geruchlichen Beeinträchtigungen der Lebensmittel ausgehen. Das gilt ganz besonders für Sorbinsäure, die strukturell den in Nahrungsfetten vorkommenden Fettsäuren eng verwandt ist und in gleicher Weise wie diese Fettsäuren im Stoffwechsel des Körpers abgebaut wird.

Überraschenderweise wurde nun gefunden, dass Sorbinsäure und insbesondere ihre wasserlöslichen Salze durchaus in der Lage sind, Holz und Holzgegenständen auch in feuchter Umgebung für längere Zeit vor holzschädlichen Pilzen zu schützen. Diese Schutzwirkung wird auch schon bei dem höheren pH-Wert des Holzes erreicht, obwohl allgemein darauf hingewiesen wird, dass Sorbinsäure und ihre Salze nur bei saurem pH-Wert des zu konservierenden Gutes wirksam sind (z. B.: Handbuch Lebensmittelzusatzstoffe, Abschnitt B II-1.2, S. 3, 1997).

Die Erfindung betrifft dementsprechend Holzpaletten, welche imprägniert sind mit einer Lösung enthaltend a) ein Lösungsmittel aus der Gruppe der C₂-C₄-Alkandiole oder eine Mischung aus Wasser und einem C₂-C₄-Alkandiol, und b) Sorbinsäure und/oder ein oder mehrere Salze der Sorbinsäure.

Weiterhin betrifft die Erfindung ein Verfahren zum Schutz von Holzpaletten.

Unter Salzen der Sorbinsäure werden insbesondere die wasserlöslichen Salze verstanden, bevorzugt die Natrium-, Kalium- und Magnesiumsalze.

Die Schutzwirkung von Sorbinsäure und ihren Salzen ist für Paletten zum Transport von Rohstoffen für die Lebensmittelherstellung interessant und bedeutsam. Solche Paletten werden bei Transport und Lagerung den verschiedensten Bedingungen ausgesetzt, darunter u. U. als Paletten selbst hoher Feuchtigkeit, wenn das palettierte Gut noch durch eine Umverpackung vor Feuchtigkeit geschützt bleibt. Der Schutz der Paletten vor Pilzbefall ist deshalb nicht einfach. Es wurde jedoch gefunden, dass Holz nach Behandlung mit Salzen der Sorbinsäure auch in feuchter Umgebung für längere Zeit frei von Pilzbefall bleibt und zwar unter Bedingungen, die mehr als einem normalen Umlauf der Paletten entsprechen. Damit lassen sich Holzpaletten, die im Bereich der Lebensmittelproduktion und Lebensmittelverarbeitung eingesetzt werden sollen, vor unerwünschten Befall mit Schimmelpilzen schützen, ohne dass ein Risiko besteht, dass gesundheitlich oder geruchlich bedenkliche Spuren an herkömmlichen Holzschutzmitteln auf Lebensmittel oder Lebensmittelverpackungen übergehen.

Der Schutz des Holzes vor Pilzen lässt sich mit einer einfachen Behandlung mit Lösungen der Salze der Sorbinsäure erreichen, ohne dass dabei besondere oder aufwendige Verfahren des Aufbringens oder Imprägnierens erforderlich wären, die über die bei der Holzbehandlung gängigen Verfahren hinausgehen. Geeignet sind alle Verfahren, mit denen die Oberfläche des Holzes oder der Holzgegenstände gleichmäßig mit Lösungen der Sorbinsäure und/oder der Salze der Sorbinsäure benetzt werden kann, also Tauchen, Besprühen, Bestreichen und andere. Die Konzentrationen an Sorbinsäure und/oder Salzen der Sorbinsäure werden auf das vorgesehene Behandlungsverfahren abgestimmt. Sie können grundsätzlich in weiten Grenzen variieren und werden nach oben nurdurch die Löslichkeitsgrenze, nach unten durch die bei zu geringer Konzentrationen nur noch geringe Schutzwirkung begrenzt. Begrenzte Schutzwirkung kann bereits mit wenigen Gew.-% erreicht werden, insbesondere wenn trockenes Holz eingesetzt und die Aufnahme der Lösungen durch längere Tauchzeiten begünstigt oder das Holz beim Besprühen oder Bestreichen kräftig benässt wird. Es kommen Lösungen der Salze in C₂-C₄-Alkandiolen oder Mischungen aus diesen Alkoholen mit Wasser, insbesondere wässrigem 1,2-Propandiol, mit bevorzugten Konzentrationen im Bereich von 1 - 50 Gew.-%, insbesondere im Bereich von 3 - 30 Gew.-%, besonders bevorzugt 10 - 40 Gew.-% zum Einsatz. Bevorzugt sind Lösungen in Mischungen von Wasser mit wenig flüchtigen Alkoholen zur Vermeidung von Rissbildung bei zu schnellem Abtrocknen.

Für besonders intensive Schutzwirkung kann an die Stelle einer einfachen Tauchbehandlung auch eine Druckimprägnierung oder eine Imprägnierung nach vorhergehender Evakuierung treten, jeweils mit Lösungen der Sorbinsäure und/oder der Sorbinsäuresalze in Gemischen aus Wasser und 1,2-Propandiol.

Nach der Behandlung reicht in der Regel einfaches Abtrocken an trockener Luft aus, um die gewünschte Schutzwirkung zu erreichen. Alternativ ist natürlich auch eine beschleunigte Trocknung in beheizten Räumen oder Kammern oder in einem warmen oder trockenen Luftstrom möglich.

Die Behandlung erfolgt vorzugsweise an den zur Weiterverarbeitung bestimmten Holzteilen, damit die gesamte Oberfläche gleichmäßig in Kontakt mit der Sorbinsäure und/oder den Salzen der Sorbinsäure kommt. Sie kann aber auch an fertigen Holzgegenständen vorgenommen werden, wenn die Form den Kontakt der gesamten Oberfläche mit den Lösungen der Sorbinsäure und/oder Sorbinsäuresalze ermöglicht.

Überraschenderweise lässt sich der Schutz der Holzpaletten erreichen, ohne dass nachteilige Wirkungen in Kauf genommen werden müssen. Insbesondere bleiben die Holzpaletten praktisch geruchlos. Zwar ändert sich die Farbe nach der Behandlung zu einem braunen Farbton, der aber als durchaus angenehm und eher ansprechender als der von beispielsweise unbehandeltem Fichten- oder Kiefernholz angesehen wurde. Die Elastizität des Holzes und seine Festigkeit werden durch die Behandlung nicht nachteilig beeinflusst.

Die Erfindung wird durch folgendes Beispiel erlautert:

### Beispiel 1

### Tauchimprägnierung mit wäßriger Kaliumsorbatlösung

Lufttrockene Kiefernbretter werden bis zur gleichmäßigen sichtbaren Durchfeuchtung der Oberfläche in eine Lösung von 30 % Kaliumsorbat in einem Gemisch aus 75 Vol.% Wasser und 25 Vol% 1,2-Propandiol getaucht. Nach der Behandlung läßt man sie lufttrocken werden. Anschließend werden die Bretter offen und nur vor direktem Beregnen geschützt bei normaler Raumtemperatur zusammen mit unbehandelten Brettern für 3 Wochen gelagert. Nach Abschluss der Lagerung weisen die unbehandelten Bretter starken Bläuebefall auf, der fast die gesamte Oberfläche umfaßt, während die behandelten Bretter trotz Lagerung unmittelbar neben den befallenen Brettern völlig frei von Pilzbefall bleiben. Im Vergleich zum frischen Holz ergibt sich lediglich eine Verfarbung zu einem blaßbraunen Farbton.

## Patentansprüche

1. Holzpalette, imprägniert mit einer Lösung enthaltend
a) ein Lösungsmittel aus der Gruppe der C₂-C₄-Alkandiole oder eine Mischung aus Wasser und einem C₂-C₄-Alkandiol und
b) Sorbinsäure und/oder ein oder mehrere Salze der Sorbinsäure.

2. Holzpalette nach Anspruch 1, **dadurch gekennzeichnet, dass** das Salz der Sorbinsäure das Natrium-, Kalium- oder Magnesiumsalz der Sorbinsäure ist.

3. Holzpalette nach Anspruch 2, **dadurch gekennzeichnet, dass** das Salz der Sorbinsäure Kaliumsorbat ist.

4. Holzpalette nach einem der Ansprüche 1 bis 3, **dadurch gekennzeichnet, dass** die Sorbinsäure und/oder ein oder mehrere Salze der Sorbinsäure in der Lösung in einer Konzentration von 1 bis 50 Gew.-% eingesetzt ist/sind.

5. Holzpalette nach Anspruch 4, **dadurch gekennzeichnet, dass** die Konzentration der Sorbinsäure und/oder eines oder mehrerer Salze der Sorbinsäure in der Lösung 3 bis 30 Gew.-% beträgt.

6. Holzpalette nach Anspruch 1, **dadurch gekennzeichnet, dass** das Alkandiol 1,2-Propandiol ist.

7. Verfahren zum Schutz von Holzpaletten gegen Pilzbefall durch Imprägnierung der Holzpalette mit einer Lösung enthaltend
a) ein Lösungsmittel aus der Gruppe der C₂-C₄-Alkandiole oder eine Mischung aus Wasser und einem C₂-C₄-Alkandiol und
b) Sorbinsäure und/oder ein oder mehrere Salze der Sorbinsäure.

8. Verfahren nach Anspruch 7, **dadurch gekennzeichnet, dass** als Alkandiol 1,2-Propandiol eingesetzt wird.

9. Verfahren nach Anspruch 7 oder 8, **dadurch gekennzeichnet, dass** die Sorbinsäure und/oder ein oder mehrere Salze der Sorbinsäure in der Lösung in einer Konzentration von 1 bis 50 Gew.-%, insbesondere 3 bis 30 Gew.-% eingesetzt wird/werden.

10. Verfahren nach einem der Ansprüche 7 bis 8, **dadurch gekennzeichnet, dass** die Holzpalette durch Eintauchen in die Lösung imprägniert wird.

11. Verfahren nach einem der Ansprüche 7 bis 9, **dadurch gekennzeichnet, dass** die Holzpalette mit der Lösung unter erhöhtem Druck imprägniert wird.

12. Verfahren nach einem der Ansprüche 7 bis 9, **dadurch gekennzeichnet, dass** die Holzpalette vor der Imprägnierung mit der Lösung einem Unterdruck ausgesetzt wird.

13. Verfahren nach einem der Ansprüche 7 bis 9, **dadurch gekennzeichnet, dass** die Lösung auf die Oberfläche der Holzpalette aufgesprüht oder aufgestrichen wird.

14. Verwendung einer Lösung von Sorbinsäure und/oder einem oder mehreren Salzen der Sorbinsäure in einem Lösungsmittel, ausgewählt aus der Gruppe der C₂-C₄-Alkandiole und einer Mischung aus Wasser und einem C₂-C₄-Alkandiol, zum Imprägnieren von Holzpaletten.

15. Verwendung nach Anspruch 14 zum Schutz gegen Pilzbefall.

## Claims

1. A wooden pallet impregnated with a solution comprising
a) a solvent from the group of C₂-C₄-alkanediols or a mixture of water and a C₂-C₄-alkanediol and
b) sorbic acid and/or one or more salts of sorbic acid.

2. The wooden pallet as claimed in claim 1, wherein the salt of sorbic acid is the sodium salt, potassium salt or magnesium salt of sorbic acid.

3. The wooden pallet as claimed in claim 2, wherein the salt of sorbic acid is potassium sorbate.

4. The wooden pallet as claimed in one of claims 1 to 3, wherein the sorbic acid and/or one or more salts of sorbic acid is/are used in the solution in a concentration of 1 to 50% by weight.

5. The wooden pallet as claimed in claim 4, wherein the concentration of sorbic acid and/or one or more salts of sorbic acid in the solution is 3 to 30% by weight.

6. The wooden pallet as claimed in claim 1, wherein the alkanediol is 1,2-propanediol.

7. A method for protecting wooden pallets from fungal infection by impregnating the wooden pallet with a solution comprising
a) a solvent from the group of C₂-C₄-alkanediols or a mixture of water and a C₂-C₄-alkanediol and
b) sorbic acid and/or one or more salts of sorbic acid.

8. The method as claimed in claim 7, wherein the alkanediol used is 1,2-propanediol.

9. The method as claimed in claim 7 or 8, wherein the sorbic acid and/or one or more salts of sorbic acid is/are used in the solution in a concentration of 1 to 50% by weight, in particular 3 to 30% by weight.

10. The method as claimed in either of claims 7 and 8, wherein the wooden pallet is impregnated by immersion in the solution.

11. The method as claimed in one of claims 7 to 9, wherein the wooden pallet is impregnated with the solutiom at elevated pressure.

12. The method as claimed in one of claims 7 to 9, wherein the wooden pallet, prior to the impregnation with the solution, is exposed to a negative pressure.

13. The method as claimed in one of claims 7 to 9, wherein the solution is sprayed or coated onto the surface of the wooden pallet.

14. The use of a solution of sorbic acid and/or one or more salts of sorbic acid in a solvent, selected from the group of C₂-C₄-alkanediols and a mixture of water and a C₂-C₄-alkanediol, for impregnating wooden pallets.

15. The use as claimed in claim 14 for protecting from fungal infection.

## Revendications

1. Palette en bois imprégnée d'une solution contenant
a) un solvant appartenant au groupe des alcanediols en C2-C4 ou un mélange d'eau et d'un alcanediol en C2-C4-et
b) de l'acide sorbique et/ou un ou plusieurs sels de l'acide sorbique.

2. Palette en bois selon la revendication 1, **caractérisée en ce que** le sel de l'acide sorbique est le sel de sodium, de potassium ou de magnésium de l'acide sorbique.

3. Palette en bois selon la revendication 2, **caractérisée en ce que** le sel de l'acide sorbique est du sorbate de potassium.

4. Palette en bois selon une des revendications 1 à 3, **caractérisée en ce que** l'acide sorbique et/ou le un ou les plusieurs sels de l'acide sorbique est/sont utilisés dans la solution en une concentration de 1 à 50 % en poids.

5. Palette en bois selon la revendication 4, **caractérisée en ce que** la concentration de l'acide sorbique et/ou du un ou des plusieurs sels de l'acide sorbique dans la solution est de 3 à 30 % en poids.

6. Palette en bois selon la revendication 1, **caractérisée en ce que** l'alcanediol est du 1,2-propanediol.

7. Procédé pour la protection de palette en bois contre les attaques par les champignons par l'imprégnation de la palette en bois avec une solution contenant
a) un solvant appartenant au groupe des alcanediols en C2-C4 ou un mélange d'eau et d'un alcanediol en C2-C4 et
b) de l'acide sorbique et/ou un ou plusieurs sels de l'acide sorbique.

8. Procédé selon la revendication 7, **caractérisé en ce que** l'alcanediol utilisé est du 1,2-propanediol.

9. Procédé selon une des revendications 7 ou 8, **caractérisé en ce que** l'acide sorbique et/ou le un ou les plusieurs sels de l'acide sorbique est/sont utilisés dans la solution en une concentration de 1 à 50 % en poids, en particulier de 3 à 30 % en poids.

10. Procédé selon une des revendications 7 à 8, **caractérisé en ce que** la palette en bois est imprégnée avec la solution par immersion.

11. Procédé selon une des revendications 7 à 9, **caractérisé en ce que** la palette en bois est imprégnée avec la solution sous haute pression.

12. Procédé selon une des revendications 7 à 9, **caractérisé en ce que** la palette en bois est soumise à une dépression avant l'imprégnation avec la solution.

13. Procédé selon une des revendications 7 à 9, **caractérisé en ce que** la solution est pulvérisée ou enduite sur la surface de la palette en bois.

14. Utilisation d'une solution d'acide sorbique et/ou d'un ou de plusieurs sels de l'acide sorbique dans un solvant sélectionné dans le groupe des alcanediols en C₂-C₄ et dans un mélange d'eau et d'un alcanediol en C₂-C₄, pour l'imprégnation de palettes en bois.

15. Utilisation selon la revendication 14 pour la protection contre les attaques par les champignons.
